# EUROPEAN PATENT SPECIFICATION

(11) **EP 3 098 113 B1**
(45) Date of publication and mention of the grant of the patent: **08.04.2020**
(21) Application number: 16170123.0
(22) Date of filing: 18.05.2016
(51) Int. Cl.: B60P 7/00, B60P 1/64

(54) **CARGO SPACE WITH PALLET GUIDE**
LADERAUM MIT PALETTEN-FÜHRUNG
ESPACE DE FRET AVEC GUIDE DE PALETTE

(30) Priority: 19.05.2015 NL 2014825
(43) Date of publication of application: 30.11.2016
(73) Proprietor: MG Dienstverlening en Transport, 1602 CB Enkhuizen (NL)
(72) Inventor: van de Graaf, Marchel Nicolaas, 1602 CB Enkhuizen (NL)
(74) Representative: V.O.

(56) References cited:
- DE-A1-102012 214 277
- GB-A- 426 982
- JP-A- 2004 131 665
- US-A- 2 579 774
- US-A- 4 756 659
- US-A- 5 320 396
- US-A1- 2014 210 226

## Description

The invention relates to a cargo space.

Cargo spaces, in particular for freighters, trucks and/or trailer trucks such as a curtainsider, are known from the state of the art and are typically used for accommodating cargo for transport, such as goods resting on pallets. During loading and unloading, the pallets with the goods resting thereon are regularly slid into and out of the cargo space.

The known cargo spaces, in particular for curtainsiders, comprise a floor where posts, also called uprights, are provided next to each other on either side of the floor. The posts serve for fastening and confining the cargo, but can also be removed or folded away for loading or unloading cargo. The posts extend upwards and are provided with a receiving provision for receiving an end of an elongate boundary plate. The known receiving provisions generally comprise two flanges between which the end of the elongate boundary plate is positioned. In the cargo space, the elongate boundary plate extends in the length direction of the cargo space between two posts. The elongate boundary plate has a guiding surface facing towards the longitudinal, vertical median plane of the cargo space. The boundary plate is suitable in particular for guiding the pallets therealong substantially in the length direction of the cargo space. Additionally, the boundary plate also prevents cargo from falling out via the sides of the cargo space.

Document US 2,579,774 is considered to be the prior art closest the subject-matter of claim 1.

A drawback of the above-mentioned cargo spaces is that during loading and unloading, that is, the sliding of pallets with goods resting thereon into and out of the cargo space, it regularly occurs that a pallet is caught behind a post so that the pallet may sustain damage. In particular, it regularly happens that pallets collide with, for instance, the inner flange of the post so that a pallet is caught behind it. As a consequence, the goods on top of the pallet may topple over, as a result of which the user loses relatively much time re-stacking the goods on the pallet. Also, the goods will thereby get seriously damaged, especially when glassware goods are involved.

The object of the invention is to counteract one or more of the drawbacks mentioned. To that end, the invention provides a cargo space according to the preamble of claim 1, characterized in that the cargo space further comprises at least one guide which is provided with a first run-on surface for during use guiding a pallet at least partly away from the guiding surface of the boundary plate.

The provision of a cargo space that comprises a guide can elegantly prevent a pallet from getting caught behind the respective post, for instance the inner flange, and possibly sustaining damage as a result, or prevent the goods located on top of the pallet from possibly tipping over as a result. By providing the guide with a run-on surface, the pallet is, at least partly, guided away from the guiding surface of the boundary plate towards the longitudinal vertical median plane of the cargo space. This is to say that the pallet is guided via the run-on surface of the guide to the middle of the cargo space.

The run-on surface preferably runs up in the length direction of the cargo space and/or in the direction in which the pallets are slid into the cargo space.

Preferably, the guide is provided on the elongate boundary plate, for instance on the guiding surface thereof. It is also possible that the guide is situated, for instance, on the floor and/or on the respective post.

The cargo space can preferably be provided with a plurality of boundary plates which are disposed on top of each other at the sides of the cargo space. Thus, it is possible that between two posts, per side 2, 4, 6 or 8 boundary plates are disposed, while each boundary plate can comprise a guide. What can be achieved in this manner is that, during use, pallets stacked onto each other can at least partly be guided away from the guiding surface of one of the boundary plates.

The guide can be provided near an end of the boundary plate, for instance near the end of the boundary plate which is received by the receiving provision. The guide can be located approximately 1-5 cm from the end of the boundary plate and/or post. What can be achieved by placing the guide near the end of the boundary plate is that the pallet guided away from the guiding surface can move past the post, and in any case cannot return to its original position before the pallet has passed the post.

The guide can comprise a second run-on surface which is substantially opposite to the first run-on surface. This can prevent a pallet which is being moved substantially in the opposite direction from getting caught behind the guide.

The guide can comprise a convex surface which defines the first run-on surface. The convex surface can also define the second run-on surface. The convex surface can be formed substantially as a segment of a sphere and is preferably symmetrical. As a result, during mounting of the guide to the boundary plate, the orientation and/or the rotation of the guide is not relevant anymore and the mounting process can be considerably simplified. It is also possible that the guide has a different surface, for example, in the form of a rectangle, square, triangle or a segment of a pyramid.

Viewed from above, between the run-on surface and the guiding surface of the elongate boundary plate, there is an angle that can be greater than 120°, preferably greater than 135°, and more preferably approximately in the range of 150-170°, for instance 160°.

Furthermore, the guide comprises a top, with the distance from the top to the longitudinal vertical median plane of the cargo space being less than or equal to the distance from the post to the longitudinal vertical median plane of the cargo space.

The invention further relates to an elongate boundary plate for, during use, guiding pallets in a cargo space, comprising an elongate boundary body which is provided with a guide, preferably at least at one end of the elongate boundary body, while the guide is provided with a run-on surface for, during use, guiding a pallet at least partly away from a guiding surface of the boundary plate.

The invention further relates to the use of a guide for guiding a pallet, at least partly, away from a guiding surface of a boundary plate in a cargo space, comprising a first run-on surface, the guide being designed for fastening on the guiding surface of the boundary plate. The guide can also comprise a second run-on surface. Additionally, the guide can also comprise a convex surface, preferably a segment of a sphere.

The invention further relates to a vehicle, preferably a motor vehicle, a semitrailer or a trailer, provided with a cargo space as described hereinabove.

The invention further relates to a method comprising the steps of providing a cargo space which can comprise a chamber, preferably a cargo space as described hereinabove, having an elongate boundary plate on the side. In the cargo space, a guide can be arranged, in such a manner that, during use, a pallet is, at least partly, guided away from a guiding surface of the elongate boundary plate. The guide can be arranged on the guiding surface of the boundary plate, preferably at both ends of the guiding surface of the boundary plate. The guide can comprise a first and a second run-on surface and/or have a symmetrical shape.

The invention is described in more detail with reference to the following Figures. The embodiments shown only serve as examples and are not to be construed as limiting the invention.

In the drawing:
Fig. 1 shows a top plan view of a cargo space provided with a guide according to the invention;
Fig. 2 shows a perspective view of a part of the cargo space of Fig. 1.

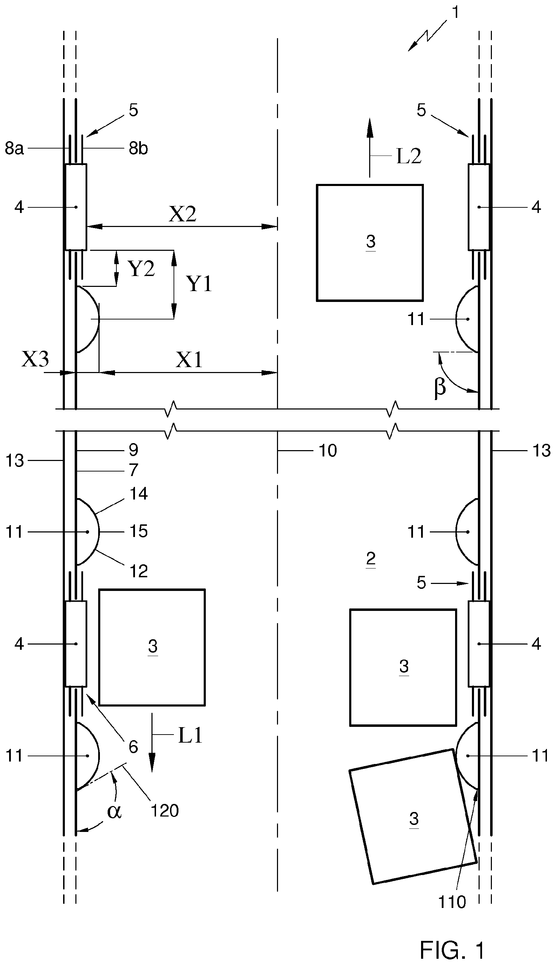

In Fig. 1, a top plan view is shown of a cargo space 1 of a curtainsider for accommodating pallets 3.

The cargo space 1 is, for example, a chamber and comprises a floor 2 on which the pallets 3 can be slid in the direction L₁ or in the direction L₂ for loading and unloading cargo. The cargo space depicted in Fig. 1 is approximately 14 meters long and 2.5 meters wide. On either side of the floor 2, posts 4 are provided which extend upwards. At the outer side of the posts, for instance a tarpaulin curtain 13 is arranged to protect and/or hold the cargo within the cargo space 1. The posts 4 are further provided with a receiving provision 5 for receiving an end 6 of an elongate boundary plate 7. In this exemplary embodiment, the receiving provision 5 comprises two flanges 8a, 8b between which the boundary plate 7 can be received. In the cargo space 1, between two posts 4, one elongate boundary plate 7 extends in the length direction of the cargo space 1. The boundary plate can have a height of approximately 10-20 cm, preferably approximately 15 cm. In this example, the cargo space is implemented with a plurality of boundary plates 7 positioned one on top of the other. These boundary plates 7 can comprise a boundary body. Further, these boundary plates can be implemented as wooden planks. The boundary plate 7 is provided with a guiding surface 9 which facies towards the longitudinal vertical median plane 10 of the cargo space 1. The guiding surface 9 and the longitudinal vertical median plane 10 can run substantially parallel to each other.

The boundary plate 7 is suitable for guiding pallets 3 therealong substantially in the length direction of the cargo space 1, such that the movement of the pallets 3 within the cargo space 1 is limited. For instance, the pallets cannot fall out via the sides of the cargo space.

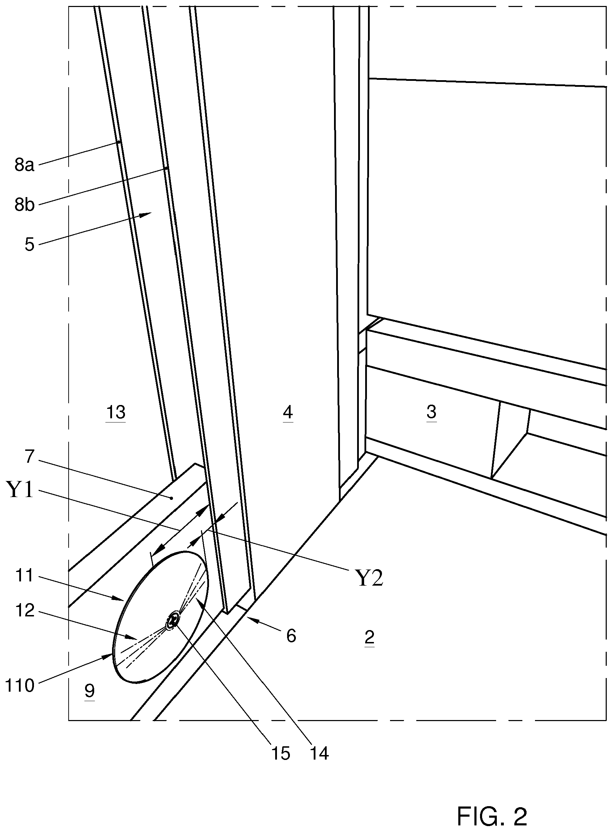

In Figures 1 and 2, it is shown that the cargo space 1 further comprises at least one guide 11 which is provided with a first run-on surface 12, such that a pallet 3 during use is at least partly guided away from the guiding surface 9 of the boundary plate 7. This is to say that when the pallet 3 is seeking to pass the guide 11 via the boundary plate 7, the pallet 3 is pushed inwards, towards the longitudinal vertical median plane 10 so as to prevent the pallet 3 getting caught behind the respective posts 4.

Further, the guide 11 may be manufactured of a durable material such as Nylon so that it is well-resistant to any impacts of pallets 3, and/or of another synthetic material. In addition, the guide may also be made of metal or wood. Preferably, the guide 11 can be manufactured by injection molding. Further, the guide 11 may be designed for fastening on the guiding surface of the boundary plate. Fastening may be done, for instance, through fastening means such as, for example, glue, screws or nails.

In the exemplary embodiment of Figures 1 and 2, the guide 11 is provided on the elongate boundary plate 7, preferably on the guiding surface 9 thereof. The guide 11 may be provided near an end 6 of the elongate boundary plate 7. The distance Y₂ between the guide and the post is here, for example, 1-5 cm, and preferably approximately 2 cm.

Figures 1 and 2 further show that the guide comprises a second run-on surface 14. The second run-on surface serves, for instance, to prevent a pallet that is being moved in substantially the opposite direction L₁ or L₂ from getting caught on the guide 11.

In this exemplary embodiment, the guide 11 has a convex surface, preferably a segment of a sphere, which defines the first run-on surface 12 and also defines the second run-on surface 14. In this example, the guide 11 is designed with a diameter of 5-20 cm, preferably 8-15 cm and more preferably approximately 10 cm. Additionally, the guide also has a thickness which can be approximately 2 mm at the edge of the guide and can run up to approximately 1-1.5 cm X₃ in the center of the sphere. The thickness/diameter ratio of the guide can vary in the range of 0.01-0.3.

In Fig. 1, it can be seen that between the run-on surface and the guiding surface 9 of the elongate boundary plate 7, an angle α is included. This angle can vary in the range of 100°-170°, is preferably greater than 120°, and more preferably greater than 135°. That the angle α mentioned can vary in the range of 100°-170°, and preferably can be greater than 120°, and more preferably can even be greater than 135°, may, at least in the case of a convex first run-on surface 12, be construed to mean at least that, when viewed from above, the tangent 120 to this first run-on surface 12 that includes the smallest angle with the elongate boundary plate 7 is between 100° and 170°, and preferably can be greater than 120°, and more preferably can be greater than 135°.

It is noted that the guide 11 can be provided with a raised edge 110, for instance as is the case in the exemplary embodiment shown. This raised edge 110 can for instance be substantially transverse to the length direction of the guide 9. The raised edge 110 is preferably relatively narrow, so that a pallet or cargo provided thereon can be prevented from butting against it. Measured in the width direction of the cargo space 1, the raised edge 110 preferably does not extend farther than, for instance, 10 mm, more preferably not farther than 5 mm, still more preferably extends less than 3 mm or less than 2 mm, as, for instance, approximately 1.5 mm, approximately 1 mm or approximately 0.5 mm. While this raised edge 110 can for instance be substantially transverse to the longitudinal direction of the guiding surface 9, the angle β between the raised edge 110 and the guiding surface 9 of the elongate boundary plate 7 can preferably be greater than 90°, and be, for example, in the range of 100°-170°, and preferably be greater than 120°, and more preferably even be greater than 135°. When the angle β between the raised edge 110 and the guiding surface 9 is relatively great, for instance greater than 90° or even greater than 135°, this can prevent a pallet 3 or cargo provided thereon from possibly getting caught behind the raised edge 110, and the pallet 3, cargo and/or guide 11 from getting damaged. This can be advantageous, for instance in the case of a synthetic plastic and/or injection molded guide 11.

In Fig. 1 it is further shown that the guide 11 comprises a top 15, with the distance X₁ from the top 15 to the longitudinal vertical median plane 10 of the cargo space being less than or equal to the distance X₂ from the post to the longitudinal vertical median plane 10 of the cargo space. In particular, the distance from the flange 8b to the longitudinal vertical median plane 10 is greater than or equal to the distance X₁ from the top to the longitudinal vertical median plane 10 of the cargo space.

The thickness X₃ of the top 15 of the guide, viewed from above, can be 1-3 cm, preferably approximately 1.5 cm. The distance Y₁ from the top 15 of the guide to the posts 4 can be approximately 10-20 cm to ensure that the passing pallet does not get caught behind the respective posts 4. The ratio X₃/Y₁ can be in the range of 0.05-2.5, preferably 0.1-1.5.

As shown in the exemplary embodiment of Figure 2, the guide 11 is fastened to the guiding surface 9 of the boundary plate, near the end 6. Fastening can be done as represented, by means of a screw. It is noted that the guide can also be fastened, for instance, to the floor 2 or to the post, such that the first run-on surface, in particular the edge of the first run-on surface, is located on the guiding surface 9. Preferably, on either side of the posts 4, boundary plates 7 are provided which can each contain a guide 11.

It is noted that the above described technical features, if desired, can be isolated from their context, and be applied individually, and, if desired, can be combined with one or more of the above mentioned features.

The invention is not limited to the exemplary embodiment described here and many variations are possible within the scope of the invention as set forth in the following claims.

## Claims

1. A cargo space (1) for accommodating pallets (3), comprising a floor (2), wherein on either side of the floor (2) posts (4) are provided which extend upwards and are provided with a receiving provision (5) for receiving an end (6) of an elongate boundary plate (7), wherein the cargo space (1) is further provided with at least one elongate boundary plate (7) which extends in a length direction of the cargo space (1) between two posts (4) and which has a guiding surface (9) facing towards the longitudinal, vertical median plane (10) of the cargo space (1), wherein the boundary plate (7) is suitable for guiding pallets (3) therealong substantially in the length direction of the cargo space (1), **characterized in that** the cargo space (1) further comprises at least one guide (11) which is provided with a first run-on surface (12) for during use guiding a pallet (3) at least partly away from the guiding surface (9) of the boundary plate (7).

2. The cargo space (1) according to claim 1, wherein the guide (11) is provided on the elongate boundary plate (7) and/or near an end (6) of the elongate boundary plate (7).

3. The cargo space (1) according to claim 1 or 2, wherein the guide (11) is provided on the guiding surface (9) of the elongate boundary plate (7).

4. The cargo space (1) according to any one of the preceding claims, wherein the guide (11) comprises a second run-on surface (14).

5. The cargo space (1) according to any one of the preceding claims, wherein the guide (11) has a convex surface which defines the first run-on surface (12).

6. The cargo space (1) according to claim 5, wherein the convex surface also defines the second run-on surface (14).

7. The cargo space (1) according to any one of the preceding claims, wherein the angle (α), viewed from above, between the run-on surface (12) and the guiding surface (9) of the elongate boundary plate (7) is greater than 120°, preferably greater than 135°.

8. The cargo space (1) according to any one of the preceding claims, wherein the guide (11) has a top (15), wherein the distance (X1) from the top (15) to the longitudinal, vertical median plane (10) of the cargo space (1) is less than or equal to the distance (X2) from the post (4) to the longitudinal vertical median plane (10) of the cargo space (1).

9. An elongate boundary plate (7; 11) for during use guiding pallets (3) in a cargo space (1), comprising an elongate boundary body (7) which is provided with a guide (11), preferably at least at one end (6) of the elongate boundary body (7), wherein the guide is provided with a run-on surface (12, 14) for during use guiding a pallet (3) at least partly away from a guiding surface (9) of the boundary plate (7).

10. A use of a guide (11) for guiding a pallet (3), wherein the guide is used for guiding a pallet (3), at least partly, away from a guiding surface (9) of a boundary plate (7) in a cargo space (1), wherein the guide (11) comprises a first run-on surface (12), wherein the guide (11) is fastened on the guiding surface (9) of the boundary plate (7).

11. The use of the guide (11) according to claim 10, wherein the guide (11) comprises a second run-on surface (14).

12. The use of a guide (11) according to claim 10 or 11, wherein the guide (11) comprises a convex surface, preferably a segment of a sphere.

13. A vehicle, preferably a motor vehicle, semitrailer or trailer, provided with a cargo space (1) according to any one of claims 1-8.

14. A method, comprising the steps of:
- providing a cargo space (1), preferably a cargo space (1) according to any one of claims 1-8, having on the side an elongate boundary plate (7); and
- providing a guide (11) in the cargo space (1), such that, during use, a pallet (3), at least partly, is guided away from a guiding surface (9) of the elongate boundary plate (7).

15. A method according to claim 14, wherein the guide (11) is arranged on the guiding surface (9) of the boundary plate (7), preferably at both ends (6) of the guiding surface (9) of the boundary plate (7).

## Patentansprüche

1. Laderaum (1) zur Aufnahme von Paletten (3), umfassend einen Boden (2), wobei auf jeder Seite des Bodens (2) Pfosten (4) vorgesehen sind, die sich nach oben erstrecken und mit einer Aufnahmevorrichtung (5) zum Aufnehmen eines Endes (6) einer länglichen Begrenzungsplatte (7) versehen sind, wobei der Laderaum (1) ferner mit wenigstens einer länglichen Begrenzungsplatte (7) versehen ist, die sich in einer Längenrichtung des Laderaums (1) zwischen zwei Pfosten (4) erstreckt, der eine Führungsfläche (9) aufweist, die zur längslaufenden vertikalen Mittelebene (10) des Laderaums (1) zeigt, wobei die Begrenzungsplatte (7) geeignet ist, Paletten (3) entlang im Wesentlichen in der Längsrichtung des Laderaums (1) zu führen, **dadurch gekennzeichnet, dass** der Laderaum (1) ferner wenigstens eine Führung (11) umfasst, die mit einer ersten Auflauffläche (12) zum Führen einer Palette (3) während des Gebrauchs wenigstens teilweise von der Führungsfläche (9) der Begrenzungsplatte (7) weg vorgesehen ist.

2. Laderaum (1) nach Anspruch 1, wobei die Führung (11) an der länglichen Begrenzungsplatte (7) und/oder nahe einem Ende (6) der länglichen Begrenzungsplatte (7) vorgesehen ist.

3. Laderaum (1) nach Anspruch 1 oder 2, wobei die Führung (11) auf der Führungsfläche (9) der länglichen Begrenzungsplatte (7) vorgesehen ist.

4. Laderaum (1) nach einem der vorhergehenden Ansprüche, wobei die Führung (11) eine zweite Auflauffläche (14) umfasst.

5. Laderaum (1) nach einem der vorhergehenden Ansprüche, wobei die Führung (11) eine konvexe Oberfläche aufweist, die die erste Auflauffläche (12) definiert.

6. Laderaum (1) nach Anspruch 5, wobei die konvexe Oberfläche auch die zweite Auflauffläche (14) definiert.

7. Laderaum (1) nach einem der vorhergehenden Ansprüche, wobei der Winkel (α), der von oben gesehen zwischen der Auflauffläche (12) und der Führungsfläche (9) der länglichen Begrenzungsplatte (7) hegt, größer als 120°, vorzugsweise größer als 135° ist.

8. Laderaum (1) nach einem der vorhergehenden Ansprüche, wobei die Führung (11) eine Oberseite (15) aufweist, wobei der Abstand (X1) von der Oberseite (15) zur längslaufenden vertikalen Mittelebene (10) des Laderaums (1) kleiner oder gleich dem Abstand (X2) vom Pfosten (4) zur vertikalen längslaufenden Mittelebene (10) des Laderaums (1) ist.

9. Eine längliche Begrenzungsplatte (7; 11) zum Führen von Paletten (3) während des Gebrauchs in einem Laderaum (1), umfassend einen länglichen Begrenzungskörper (7), der mit einer Führung (11) versehen ist, vorzugsweise wenigstens an einem Ende (6) des länglichen Begrenzungskörpers (7), wobei die Führung mit einer Auflauffläche (12, 14) versehen ist, um während des Gebrauchs eine Palette (3) wenigstens teilweise von einer Führungsfläche (9) der Begrenzungsplatte (7) wegzuführen.

10. Verwendung einer Führung (11) zum Führen einer Palette (3), wobei die Führung zum Führen einer Palette (3) wenigstens teilweise weg von einer Führungsfläche (9) einer Begrenzungsplatte (7) in einem Laderaum (1) verwendet wird, wobei die Führung (11) eine erste Auflauffläche (12) umfasst, wobei die Führung (11) auf der Führungsfläche (9) der Begrenzungsplatte (7) befestigt ist.

11. Verwendung der Führung (11) nach Anspruch 10, wobei die Führung (11) eine zweite Auflauffläche (14) umfasst.

12. Verwendung einer Führung (11) nach Anspruch 10 oder 11, wobei die Führung (11) eine konvexe Oberfläche, vorzugsweise ein Segment einer Kugel, umfasst.

13. Fahrzeug, vorzugsweise ein Kraftfahrzeug, ein Auflieger oder ein Anhänger, das mit einem Laderaum (1) nach einem der Ansprüche 1 bis 8 versehen ist.

14. Verfahren, umfassend die folgenden Schritte:
- Bereitstellen eines Laderaums (1), vorzugsweise eines Laderaums (1) nach einem der Ansprüche 1 bis 8, der an der Seite eine längliche Begrenzungsplatte (7) aufweist; und
- Bereitstellen einer Führung (11) im Laderaum (1), so dass während des Gebrauchs eine Palette (3) wenigstens teilweise von einer Führungsfläche (9) der länglichen Begrenzungsplatte (7) weggeführt wird.

15. Verfahren nach Anspruch 14, wobei die Führung (11) auf der Führungsfläche (9) der Begrenzungsplatte (7) angeordnet ist, vorzugsweise an beiden Enden (6) der Führungsfläche (9) der Begrenzungsplatte (7).

## Revendications

1. Espace de fret (1) pour loger des palettes (3), comprenant un plancher (2), dans lequel de chaque côté du plancher (2), on prévoit des montants (4) qui s'étendent vers le haut et sont prévus avec une provision de réception (5) pour recevoir une extrémité (6) d'une plaque de limite allongée (7), dans lequel l'espace de fret (1) est en outre prévu avec au moins une plaque de limite allongée (7) qui s'étend dans le sens de la longueur de l'espace de fret (1) entre deux montants (4) et qui a une surface de guidage (9) orientée vers le plan médian vertical, longitudinal (10) de l'espace de fret (1), dans lequel la plaque de limite (7) est appropriée pour guider les palettes (3) le long de cette dernière sensiblement dans le sens de la longueur de l'espace de fret (1), **caractérisé en ce que** l'espace de fret (1) comprend en outre au moins un guide (11) qui est prévu avec une première surface portante (12) pour guider, pendant l'utilisation, une palette (3) au moins partiellement à distance de la surface de guidage (9) de la plaque de limite (7).

2. Espace de fret (1) selon la revendication 1, dans lequel le guide (11) est prévu sur la plaque de limite allongée (7) et/ou à proximité d'une extrémité (6) de la plaque de limite allongée (7).

3. Espace de fret (1) selon la revendication 1 ou 2, dans lequel le guide (11) est prévu sur la surface de guidage (9) de la plaque de limite allongée (7).

4. Espace de fret (1) selon l'une quelconque des revendications précédentes, dans lequel le guide (11) comprend une seconde surface portante (14).

5. Espace de fret (1) selon l'une quelconque des revendications précédentes, dans lequel le guide (11) a une surface convexe qui définit la première surface portante (12).

6. Espace de fret (1) selon la revendication 5, dans lequel la surface convexe définit également la seconde surface portante (14).

7. Espace de fret (1) selon l'une quelconque des revendications précédentes, dans lequel l'angle (α), observé de dessus, entre la surface portante (12) et la surface de guidage (9) de la plaque de limite allongée (7), est supérieur à 120°, de préférence supérieur à 135°.

8. Espace de fret (1) selon l'une quelconque des revendications précédentes, dans lequel le guide (11) a une partie supérieure (15), dans lequel la distance (X1) allant de la partie supérieure (15) jusqu'au plan médian vertical, longitudinal (10) de l'espace de fret (1) est inférieure ou égale à la distance (X2) allant du montant (4) jusqu'au plan médian vertical longitudinal (10) de l'espace de fret (1).

9. Plaque de limite allongée (7 ; 11) prévue pour guider, pendant l'utilisation, des palettes (3) dans un espace de fret (1), comprenant un corps de limite allongé (7) qui est prévu avec un guide (11), de préférence au moins au niveau d'une extrémité (6) du corps de limite allongé (7), dans lequel le guide est prévu avec une surface portante (12, 14) pour guider, pendant l'utilisation, une palette (3) au moins partiellement à distance d'une surface de guidage (9) de la plaque de limite (7).

10. Utilisation d'un guide (11) pour guider une palette (3), dans laquelle le guide est utilisé pour guider une palette (3), au moins partiellement à distance d'une surface de guidage (9) d'une plaque de limite (7) dans un espace de fret (1), dans laquelle le guide (11) comprend une première surface portante (12), dans laquelle le guide (11) est fixé sur la surface de guidage (9) de la plaque de limite (7).

11. Utilisation du guide (11) selon la revendication 10, dans laquelle le guide (11) comprend une seconde surface portante (14).

12. Utilisation d'un guide (11) selon la revendication 10 ou 11, dans laquelle le guide (11) comprend une surface convexe, de préférence un segment de sphère.

13. Véhicule, de préférence un véhicule à moteur, une semi-remorque ou une remorque, prévu avec un espace de fret (1) selon l'une quelconque des revendications 1 à 8.

14. Procédé comprenant les étapes suivantes :
prévoir un espace de fret (1), de préférence un espace de fret (1) selon l'une quelconque des revendications 1 à 8, ayant sur le côté, une plaque de limite allongée (7) ; et
prévoir un guide (11) dans l'espace de fret (1) de sorte que, pendant l'utilisation, une palette (3) est au moins partiellement guidée à distance d'une surface de guidage (9) de la plaque de limite allongée (7).

15. Procédé selon la revendication 14, dans lequel le guide (11) est agencé sur la surface de guidage (9) de la plaque de limite (7), de préférence aux deux extrémités (6) de la surface de guidage (9) de la plaque de limite (7).
